# FASCICULE DE BREVET EUROPEEN

(11) **EP 2 433 774 B1**
(45) Date de publication et mention de la délivrance du brevet: **08.05.2013**
(21) Numéro de dépôt: 11182301.9
(22) Date de dépôt: 22.09.2011
(51) Int. Cl.: B29C 45/28

(54) **Système d'injection de matière thermoplastique**
Einspritzsystem für thermoplastische Stoffe
System for injecting a thermoplastic material

(30) Priorité: 23.09.2010 FR 1057654
(43) Date de publication de la demande: 28.03.2012
(73) Titulaire: RUNIPSYS EUROPE, 73420 Mery (FR)
(72) Inventeur: Deriche, Eric, 73420 MERY (FR)
(74) Mandataire: Regimbeau

(56) Documents cités:
- FR-A1- 2 939 353

## Description

### DOMAINE DE L'INVENTION

La présente invention concerne un système d'injection de matière thermoplastique dans une empreinte de moulage d'un moule d'injection.

### ARRIERE PLAN DE L'INVENTION

Un système d'injection de type « bloc chaud » ou « à canaux chauds » comporte habituellement :
- un distributeur délimitant un canal de distribution de matière thermoplastique et comportant une sortie de matière thermoplastique,
- une buse d'injection définissant au moins une portion d'un passage de transit dont l'entrée est en liaison fluidique avec la sortie du canal de distribution, et dont la sortie débouche sensiblement dans l'empreinte de moulage d'un moule d'injection,
- un obturateur monté à coulissement longitudinal à l'intérieur du passage de transit et occupant de manière alternée une position d'obturation et une position d'ouverture de celui-ci,
- des moyens de commande pour faire coulisser alternativement l'obturateur entre la position d'obturation et la position d'ouverture.

Les moyens de commande comprennent typiquement un vérin relié à l'obturateur.

Ce type de système d'injection comporte en outre des moyens d'alimentation adaptés pour pourvoir le distributeur en matière à injecter.

Pour injecter de manière satisfaisante la matière dans l'empreinte, la matière doit être maintenue à l'état fluide, cet état étant obtenu lorsque la matière est portée à une température limite déterminée, supérieure à la température de l'air ambiant.

A cet effet, le distributeur comporte de manière connue des moyens permettant de maintenir sa température, et par conséquent celle de la matière transitant dans son canal de distribution, à une température supérieure à la température limite de passage à l'état fluide de la matière.

La matière à l'état fluide est introduite dans le canal de distribution du distributeur par les moyens d'alimentation et pénètre dans le passage de transit de la buse d'injection.

Lorsque les moyens de commande amènent l'obturateur dans la position d'obturation, la sortie de la buse est obturée et la matière à injecter est retenue dans le passage de transit.

Lorsque les moyens de commande amènent l'obturateur dans la position d'ouverture, la sortie de la buse est ouverte et la matière est injectée dans l'empreinte.

De manière classique, ces moyens de commande sont situés à l'air ambiant sur la face du distributeur longitudinalement opposée à l'empreinte de moulage (ou « face arrière » du distributeur).

Or, le distributeur étant maintenu à une température élevée, il est indispensable de prévoir un refroidissement du vérin.

Ce refroidissement est typiquement obtenu au moyen d'une circulation d'eau au niveau du vérin.

Or, la mise en place de ce circuit d'eau est problématique car elle complique le système d'injection et elle est relativement onéreuse.

Par ailleurs, l'épaisseur du vérin contribue à augmenter sensiblement l'épaisseur du système d'injection.

On cherche donc à concevoir un système d'injection dans lequel on puisse s'affranchir du refroidissement des moyens de commande de l'obturateur, et dont l'épaisseur totale soit minimale.

A cet effet, la Demanderesse a conçu un système d'injection, dans une empreinte de moulage d'un moule d'injection, d'une matière thermoplastique à l'état fluide, comprenant :
- un distributeur propre à être maintenu à une température d'injection supérieure à la température limite au-delà de laquelle la matière se présente à l'état fluide, ledit distributeur comprenant un canal de distribution et au moins une sortie de matière thermoplastique,
- une buse d'injection définissant au moins une portion d'un passage de transit dont l'entrée est en liaison fluidique avec la sortie du canal de distribution, et dont la sortie débouche sensiblement dans l'empreinte de moulage,
- un obturateur monté à l'intérieur du passage de transit pour coulisser entre une position d'obturation de celui-ci et une position d'ouverture de celui-ci,
- des moyens de commande pour faire coulisser alternativement l'obturateur, lesdits moyens de commande comprenant un vérin dont la tige est parallèle à la direction de coulissement de l'obturateur, fixé de manière déportée sur le distributeur par l'intermédiaire d'une poutre aplatie, et un levier agencé en basculement autour d'un axe de manière à transmettre à l'obturateur les mouvements de la tige du vérin.

Ce système d'injection comprend donc un vérin de commande de l'obturateur qui n'est pas fixé directement sur le distributeur, mais de manière déportée par rapport à celui-ci, par l'intermédiaire d'une poutre.

Cette implantation, qui est décrite dans la demande de brevet FR 2 939 353, présente un double avantage.

Le premier est de diminuer l'épaisseur totale du système de l'ordre d'un tiers environ. En effet, le vérin est ainsi logé dans une cavité et seule l'épaisseur de la poutre reliant le vérin au distributeur contribue à l'épaisseur du système.

En outre, le vérin n'étant plus situé en contact du distributeur chaud, on peut s'affranchir du refroidissement par eau qui est nécessaire dans l'agencement de l'art antérieur, les matériaux et épaisseurs de la poutre étant adaptés pour permettre une dissipation de la chaleur.

Cependant, le fait de loger le vérin dans une cavité se fait au détriment des surfaces d'appui pour le moule d'injection.

Il peut en résulter un appui insuffisant du moule vis-à-vis de la plaque située à l'arrière du distributeur par rapport au sens d'injection, laquelle est en appui sur le plateau de la presse d'injection, ce manque d'appui pouvant se traduire par un fléchissement du moule préjudiciable à la qualité de l'injection.

Il serait donc souhaitable de pouvoir augmenter les surfaces d'appui entre le moule d'injection et le distributeur ou la plaque arrière.

Toutefois, une difficulté est que, lors des importantes variations de température des différents éléments, des dilatations du distributeur et de la poutre se produisent, avec une amplitude pouvant aller jusqu'à 3 mm.

Il faut donc éviter de contraindre ces pièces pour éviter qu'elles ne soient endommagées par cisaillement ou qu'un défaut de centrage de la tige d'obturateur ou de la tige de vérin ne se produise.

Un but de l'invention est donc de remédier aux inconvénients précités tout en surmontant ces difficultés et de concevoir un système d'injection présentant des surfaces d'appui améliorées pour le moule d'injection.

### BREVE DESCRIPTION DE L'INVENTION

Conformément à l'invention, il est proposé un système d'injection, dans une empreinte de moulage d'un moule d'injection, d'une matière thermoplastique à l'état fluide, comprenant :
- un distributeur propre à être maintenu à une température d'injection supérieure à la température limite au-delà de laquelle la matière se présente à l'état fluide, ledit distributeur comprenant un canal de distribution et au moins une sortie de matière thermoplastique,
- une buse d'injection définissant au moins une portion d'un passage de transit dont l'entrée est en liaison fluidique avec la sortie du canal de distribution, et dont la sortie débouche sensiblement dans l'empreinte de moulage,
- un obturateur monté à l'intérieur du passage de transit pour coulisser entre une position d'obturation de celui-ci et une position d'ouverture de celui-ci,
- des moyens de commande pour faire coulisser alternativement l'obturateur, lesdits moyens de commande comprenant un vérin, fixé de manière déportée sur le distributeur par l'intermédiaire d'une poutre aplatie, et un levier agencé en basculement autour d'un axe de manière à transmettre à l'obturateur les mouvements de la tige du vérin,
ledit système d'injection étant remarquable en ce que :
- il comprend en outre un élément d'appui présentant une surface d'appui contre le moule d'injection et une surface d'appui contre une plaque située à l'arrière du distributeur par rapport au sens d'injection, et
- la poutre est liée audit élément d'appui par au moins un moyen élastique adapté pour absorber des dilatations de la poutre et/ou du distributeur selon une direction perpendiculaire à la direction d'injection.

Ainsi, lors du fonctionnement du système d'injection ledit module d'appui, bien que contraint selon la direction d'injection, permet d'absorber, grâce auxdits moyens élastiques, les éventuelles dilatations thermiques du distributeur et/ou de la poutre dans une direction perpendiculaire à la direction d'injection sans qu'un cisaillement du système de commande de l'obturateur n'intervienne.

Les surfaces d'appui du module d'appui procurent en parallèle un meilleur appui du moule contre le plateau de la presse d'injection, ce qui permet d'éviter tout fléchissement excessif du moule.

Selon d'autres caractéristiques de ce système, considérées séparément ou en combinaison :
- ledit élément d'appui comprend des parois parallèles à la direction d'injection et reliant les surfaces d'appui et un support perpendiculaire à la direction d'injection présentant des orifices pour le passage d'un moyen de fixation du vérin sur la poutre, et ledit moyen élastique est intercalé entre ledit support et le moyen de fixation du vérin sur la poutre ;
- ledit système comprend en outre au moins une entretoise agencée entre ledit moyen élastique et le moyen de fixation du vérin sur la poutre et adaptée pour éviter le pincement du support entre le vérin et le moyen de fixation du vérin sur la poutre ;
- selon un mode de réalisation préféré, ledit moyen élastique est une rondelle élastique ;
- de manière particulièrement avantageuse, la poutre porte l'axe de basculement du levier ;
- selon un mode de réalisation particulier, la poutre est une pièce massive ;
- selon un autre mode de réalisation, la poutre est formée d'un assemblage de pièces en tôle d'acier ;
- plus précisément, ladite poutre peut comprendre deux bras parallèles, une bride de vérin fixée sur le vérin, et une bride d'obturateur fixée sur le distributeur ;
- par ailleurs, les bras et les brides d'obturateur et de vérin présentent des découpes complémentaires permettant leur emboîtement ;
- les bras et la bride d'obturateur présentent préférentiellement des découpes permettant leur centrage sur le pied de buse ;
- le levier comprend deux bras en tôle d'acier.

Un autre aspect de l'invention concerne un élément d'appui adapté pour le système d'injection décrit plus haut.

Ledit élément présente une surface d'appui contre le moule d'injection et une surface d'appui contre une plaque située à l'arrière du distributeur par rapport au sens d'injection, un support pour la fixation de la poutre et au moins un moyen élastique destiné à être intercalé entre ledit support et le moyen de fixation du vérin sur la poutre pour absorber les éventuelles dilatations thermiques du distributeur et/ou de la poutre dans une direction perpendiculaire à la direction d'injection sans qu'un cisaillement du système de commande de l'obturateur n'intervienne.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue éclatée de moyens de commande de l'obturateur conformes à un mode de réalisation de l'invention particulièrement adapté à une utilisation intensive de type grande série,
- la figure 2 est une vue éclatée des moyens de commande conformes à un autre mode de réalisation de l'invention destiné préférentiellement à une utilisation peu intensive de type prototype ou petite série,
- la figure 3 illustre les moyens de commande de la figure 2 en position assemblée,
- les figures 4 et 5 illustrent respectivement un détail d'assemblage de la tête d'obturateur de la figure 2, en vue de dessous et en vue de dessus,
- la figure 6 illustre les formes respectives de la poutre et de la bride permettant un emboîtement avec coopération de formes,
- la figure 7 illustre la bride de la figure 6 en position assemblée,
- la figure 8A illustre un premier mode de réalisation de l'élément d'appui assemblé avec les moyens de commande de l'obturateur,
- la figure 8B est similaire à la figure 8A mais sans l'élément d'appui pour montrer la fixation du vérin sur l'élément d'appui,
- la figure 9 est une vue en perspective d'un deuxième mode de réalisation de l'élément d'appui,
- la figure 10 est une vue en coupe du système conforme au deuxième mode de réalisation
- la figure 11A illustre un troisième mode de réalisation de l'élément d'appui, assemblé avec les moyens de commande de l'obturateur,
- la figure 11B est une vue avec une coupe partielle de l'élément d'appui de la figure 11A,
- la figure 11C présente une coupe partielle de la figure 11B au niveau des fixations du vérin,
- la figure 12 est une vue en perspective de l'élément d'appui illustré aux figures 11A à 11C,
- la figure 13 est une vue éclatée du troisième mode de réalisation,
- la figure 14 est une vue éclatée du deuxième mode de réalisation.

### DESCRIPTION DETAILLEE DE L'INVENTION

### Moyens de commande de l'obturateur

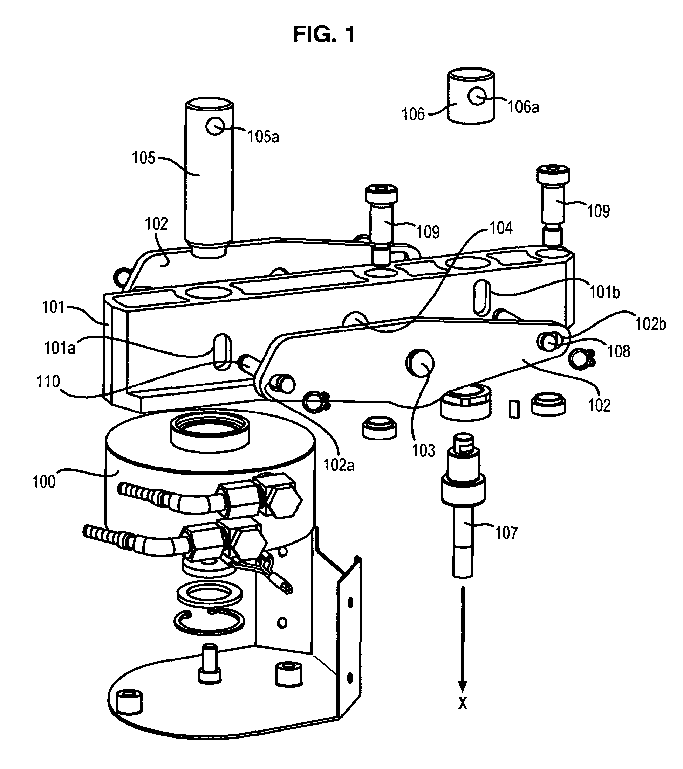

Selon un mode de réalisation de base de l'invention, les moyens de commande de l'obturateur comprennent, en référence à la figure 1 :
- un vérin 100, fixé de manière déportée sur le distributeur par l'intermédiaire d'une poutre 101 de forme aplatie,
- deux bras de levier 102 sensiblement symétriques, disposés de part et d'autre de la poutre 101, et montés en basculement sur celle-ci au moyen d'un axe 103 inséré dans un alésage traversant 104 situé sensiblement à mi-longueur de la poutre 101,
- une tête de vérin 105 montée sur le vérin 100 et mobile en translation (ici, dans une direction parallèle à la direction X de déplacement de l'obturateur),
- une tête d'obturateur 106 rigidement liée à l'obturateur 107, avec un jeu fonctionnel approprié entre les deux pièces.

Il est à noter que dans l'ensemble des figures présentées, la direction de déplacement de la tête de vérin est parallèle à la direction de déplacement de l'obturateur, mais ceci ne constitue pas une limitation et le système pourrait par exemple fonctionner avec un vérin dont la tige serait perpendiculaire à la direction de coulissement de l'obturateur, et agissant sur des bras de levier plats 102 qui présenteraient alors une forme de L.

La fixation du vérin 100 sur la poutre 101 est assurée par tout moyen connu, tel que des vis (non représentées sur la figure 1).

Les mouvements de la tête de vérin 105 sont transmis à la tête d'obturateur 106 par l'intermédiaire des bras de levier 102.

En effet, la tête de vérin 105 et la tête d'obturateur 106 sont percées chacune d'un alésage respectivement 105a, 106a, à travers lequel passe un axe respectivement 110, 108.

Les axes 110 et 108 traversent respectivement la poutre 101 au niveau de deux trous oblongs 101 a, 101 b, et chacun des bras de levier 102 au niveau de deux trous oblongs 102a, 102b.

A son extrémité opposée au vérin 100, la poutre 101 est fixée sur le distributeur par deux vis 109.

Ainsi, lorsque le vérin impose une translation de la tête de vérin 105 vers le haut (dans la configuration de la figure 1), les leviers 102 basculent autour de l'axe 103 et entraînent la tête d'obturateur 106 en translation vers le bas, et occasionnent l'obturation de la buse.

Inversement, une translation de la tête de vérin 105 vers le bas entraîne la tête d'obturateur 106 en translation vers le haut, et permet ainsi l'ouverture de la buse.

La poutre 101 présente une forme aplatie, c'est-à-dire que sa longueur est supérieure à sa hauteur et que sa hauteur est inférieure ou égale à la hauteur du vérin.

A titre d'exemple non limitatif, la poutre 101 illustrée à la figure 1 présente une hauteur de l'ordre de 40 mm, une longueur d'environ 200 mm et une largeur d'environ 40 mm. Elle est associée par exemple à un vérin hydraulique présentant une hauteur de 40 mm environ.

Pour obtenir une rigidité suffisante et une robustesse compatible avec la durée de vie du système d'injection, la poutre 101 peut être réalisée par usinage d'un bloc d'acier. On précise que l'acier peut éventuellement subir un traitement à coeur ou en surface en vue d'améliorer ses propriétés.

Selon un autre mode de réalisation, la poutre 101 peut être réalisée en fonderie de fonte ou d'acier, le matériau pouvant en outre subir tout traitement approprié.

Ces modes de réalisation dans lesquels la poutre est massive, c'est-à-dire formée en une seule pièce, sont particulièrement adaptés lorsque le système d'injection est prévu pour la fabrication de grandes séries (c'est-à-dire devant assurer plus de 200.000 cycles d'injection). En effet, une telle poutre est apte à respecter le cahier des charges de tenue en fatigue pour le nombre de cycles prévu.

Par ailleurs, dans une recherche constante de diminution des coûts, notamment dans le cas de la fabrication de petites quantités de pièces (c'est-à-dire allant typiquement de 1000 pièces (prototypes) jusqu'à 200.000 pièces (petite série)), pour laquelle le coût du moule a un impact important sur le coût des pièces, une nouvelle conception de la poutre, visant à diminuer le coût de la poutre, a été définie.

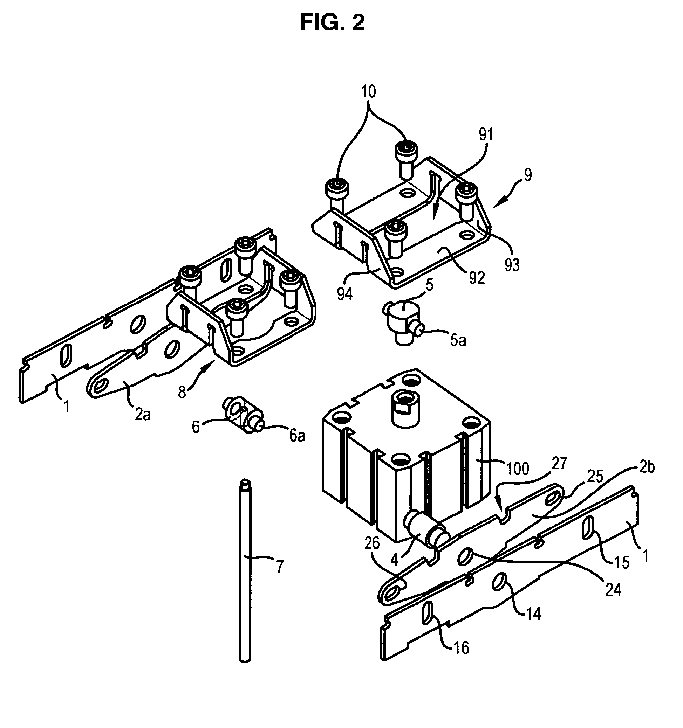

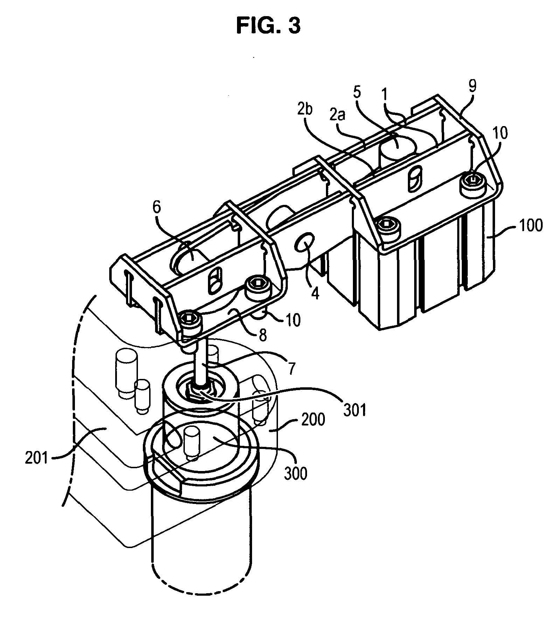

Selon une variante et en référence aux figures 2 et 3, la poutre est réalisée sous forme d'un assemblage de pièces de structure 1, 8 et 9 en tôle formées par découpe et pliage.

Deux bras 1 parallèles, sensiblement symétriques par rapport à un plan perpendiculaire à l'axe de basculement 4, ont pour fonction de relier rigidement une bride d'obturateur 8 et une bride de vérin 9.

Les bras 1 présentant une forme allongée sensiblement rectangulaire, on définit pour chaque bras son extrémité distale, qui est l'extrémité située du côté du vérin, et son extrémité proximale qui est l'extrémité située du côté du distributeur.

La bride d'obturateur 8 est fixée sur le distributeur 200 au moyen de quatre vis 10.

La bride de vérin 9 est fixée sur une face dite supérieure du vérin 100, perpendiculaire à la tige du vérin, par quatre vis 10.

En position assemblée, les bras 1 sont perpendiculaires à la face arrière du distributeur, sur laquelle est fixée la bride d'obturateur 8, et à la face supérieure du vérin.

Les bras 1 sont reliés par un axe de basculement 4.

Un levier comprenant deux bras 2a et 2b, parallèles et sensiblement symétriques par rapport à un plan perpendiculaire à l'axe de basculement 4, a pour fonction de transmettre le déplacement de la tige du vérin 100 à l'obturateur 7.

On définit pour chaque bras 2a, 2b du levier une extrémité distale, qui est l'extrémité située du côté du vérin, et une extrémité proximale qui est l'extrémité située du côté de l'obturateur.

Chaque bras 2a, 2b présente, vers son extrémité proximale, un alésage oblong 26 pour le passage de l'axe 6a de la tête d'obturateur 6.

Ami-course, l'alésage oblong 26 présente sa plus grande dimension perpendiculairement à la direction de coulissement de l'obturateur 7.

De même, chaque bras 2a, 2b présente vers son extrémité distale un alésage oblong 25 pour le passage de l'axe 5a de la tête de vérin 5, la plus grande dimension de l'alésage 25 étant, à mi-course, dans une direction perpendiculaire à la direction X de coulissement de l'obturateur.

Par ailleurs, chaque bras 1 présente des alésages oblongs 16 et 15 respectivement pour le passage des axes 6a et 5a.

A mi-course, la plus grande dimension des alésages oblongs 15 et 16 est parallèle à la direction X de coulissement de l'obturateur 7.

La plus grande dimension des alésages 15 et 16 est légèrement supérieure à la course de coulissement de l'obturateur 7 qui est imposée par le vérin.

La bride d'obturateur 8 présente une forme générale de U, avec une face 82 sensiblement carrée en contact avec la face arrière du distributeur 200, et deux branches parallèles 83 et 84 perpendiculaires à la face 82.

La face 82 est percée à proximité de ses coins de quatre alésages pour le passage des vis 10 de fixation sur le distributeur 200. Elle présente également une découpe centrale pour le passage de la tête d'obturateur 6.

En position assemblée, les branches 83 et 84 de la bride d'obturateur sont perpendiculaires aux bras 1.

La bride de vérin 9 présente également une forme générale de U, avec une face 92 sensiblement carrée en contact avec le vérin 100, et deux branches parallèles 93 et 94 perpendiculaires à la face 92.

La face 92 est percée à proximité de ses coins de quatre alésages pour le passage des vis 10 de fixation sur le vérin 100, et présente une découpe centrale 91 pour le passage de la tête de vérin 5.

Sur la figure 3, on peut observer par ailleurs le distributeur 200, un canal de distribution 201 débouchant dans le pied de buse 300, et le guide d'obturateur 301.

Les pièces de structure 1, 8 et 9 présentent des découpes avantageusement définies pour permettre un assemblage simple et un centrage des moyens de commande par rapport au pied de buse 300, afin d'éviter tout effort radial de l'obturateur 7 lorsqu'il coulisse dans le guide d'obturateur 301.

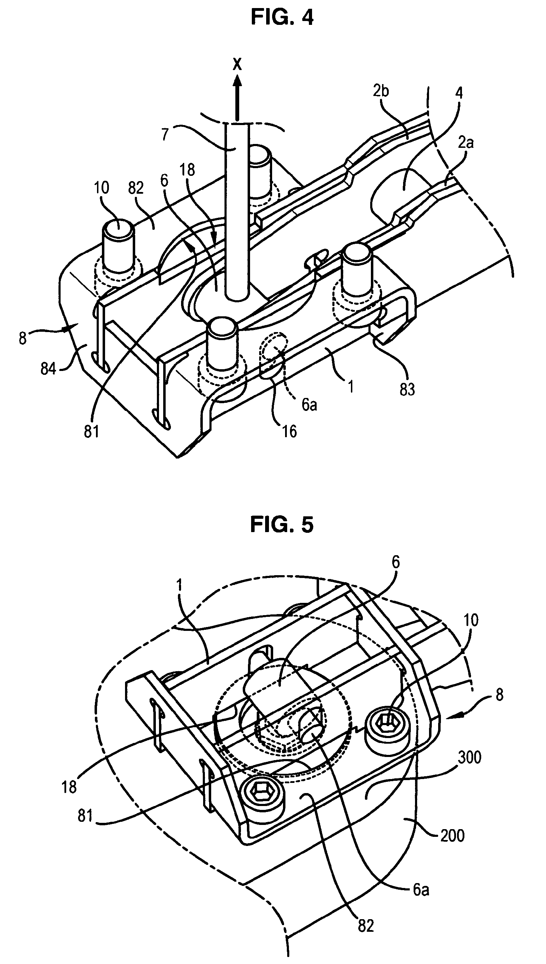

Ainsi, en référence à la figure 4, chaque bras 1 présente, sur le bord de son extrémité proximale orienté vers le distributeur, une découpe 18 en forme d'encoche rectangulaire.

Par ailleurs, la bride d'obturateur 8 présente, sur sa face 82 en contact avec le distributeur 200, une découpe circulaire 81 d'un diamètre légèrement supérieur à celui du pied de buse 300.

Ainsi, comme on peut le voir sur la figure 5, la bride d'obturateur 8 et le bras 1 viennent coiffer le pied de buse 300, ce qui permet d'assurer un bon centrage de la tête d'obturateur 6 et de l'obturateur 7 par rapport au guide d'obturateur 301.

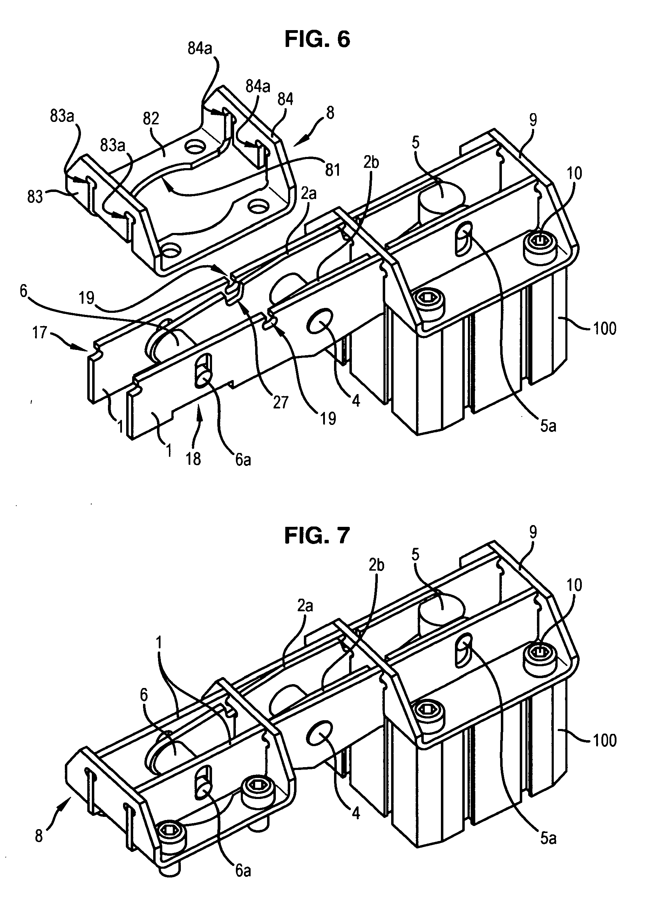

Par ailleurs, on peut observer sur la figure 6 que la bride d'obturateur 8 et le bras 1 présentent des découpes qui permettent l'assemblage de l'une sur l'autre par simple emboîtement.

Ainsi, la bride d'obturateur 8 présente, sur chacune de ses branches 83 et 84, deux découpes 83a, respectivement 84a.

Sur la branche 83, qui est celle située du côté de l'extrémité proximale des bras 1, la largeur des découpes 83a est légèrement supérieure à l'épaisseur de chaque bras 1.

Sur la branche 84, qui est celle située du côté de l'axe de basculement 4, la largeur des découpes 84a est légèrement supérieure à l'épaisseur du bras 1, du bras 2a ou 2b du levier, et du jeu entre ceux-ci.

Par ailleurs, chaque bras 1 présente, sur son bord opposé à la face du distributeur, deux encoches 17 et 19 destinées à recevoir la bride 8.

Les bras 2a et 2b du levier présentent quant à eux une encoche 27 permettant le montage de la bride 8 sans interférence avec le basculement du levier.

Ainsi, il suffit, pour assembler la bride 8, d'emboîter les découpes 83a et 84a de celle-ci sur les encoches 17, 19 des bras 1 et 27 des bras 2a et 2b, comme on peut le voir sur la figure 7.

La bride 9, les bras 1, 2a et 2b présentent des découpes similaires à celles qui viennent d'être décrites pour permettre l'emboîtement de la bride 9 sur les bras 1.

De préférence, les bras 1 et les bras 2a et 2b sont plans.

Ils peuvent donc être obtenus par une simple découpe (par exemple par laser) d'une tôle en prenant en compte les découpes telles que décrites plus haut, ainsi qu'un perçage des alésages 16, 14, 15 et 26, 24 et 25 respectivement prévus pour permettre le passage des axes 6a, 4 et 5a.

Les brides 8 et 9, qui présentent une forme générale de U, sont obtenues par une découpe à plat d'une tôle intégrant la réalisation des découpes qui viennent d'être décrites pour l'emboîtement sur les bras 1, ainsi que le perçage des alésages pour le passage des vis 10.

Après découpe, ces pièces sont pliées pour leur conférer la forme de U souhaitée.

De manière particulièrement avantageuse, toutes les pièces (bras 1, 2a, 2b et brides 8 et 9) sont découpées dans la même tôle, ce qui rend le procédé de fabrication encore plus simple et économique.

Pour garantir une rigidité suffisante des pièces de structure, il convient de choisir une tôle d'acier d'épaisseur comprise entre 2 et 10 mm, de préférence entre 3 et 5 mm.

La poutre ainsi formée et illustrée à la figure 3 présente une largeur d'environ 70 mm, une longueur de l'ordre de 180 mm et une hauteur de 30 mm.

Le vérin est par exemple un vérin pneumatique de 60 mm de haut.

Bien sûr, toutes ces dimensions ne sont données qu'à titre d'exemple non limitatif.

On souligne que l'emploi de pièces en tôle permet mieux dissiper la chaleur susceptible d'être transmise au vérin.

L'ordre d'assemblage des moyens de commande de l'obturateur est le suivant :
(a) assemblage de la tête d'obturateur 6 sur l'obturateur 7, celui-ci étant au préalable inséré dans le guide d'obturateur 301 ;
(b) assemblage de la tête de vérin 5 sur la tige du vérin 100 ;
(c) emboîtement d'un premier bras 2a et d'un premier bras 1 sur les axes 6a et 5a de la tête d'obturateur 6 et de la tête de vérin 5 ;
(d) mise en place de l'axe de basculement 4 dans les alésages 24 et 14 du premier bras 2a et du premier bras 1 ;
(e) mise en place du deuxième bras 2b et du deuxième bras 1 sur les axes 6a, 4 et 5a ;
(f) emboîtement de la bride de vérin 9 sur les bras 1 et vissage des quatre vis 10 sur le vérin 1;
(g) emboîtement de la bride d'obturateur 8 sur les bras 1 et vissage des quatre vis 10 sur le distributeur 200.

On comprendra toutefois que cet ordre n'est donné qu'à titre d'exemple et qu'une séquence différente des étapes est envisageable.

### Elément d'appui

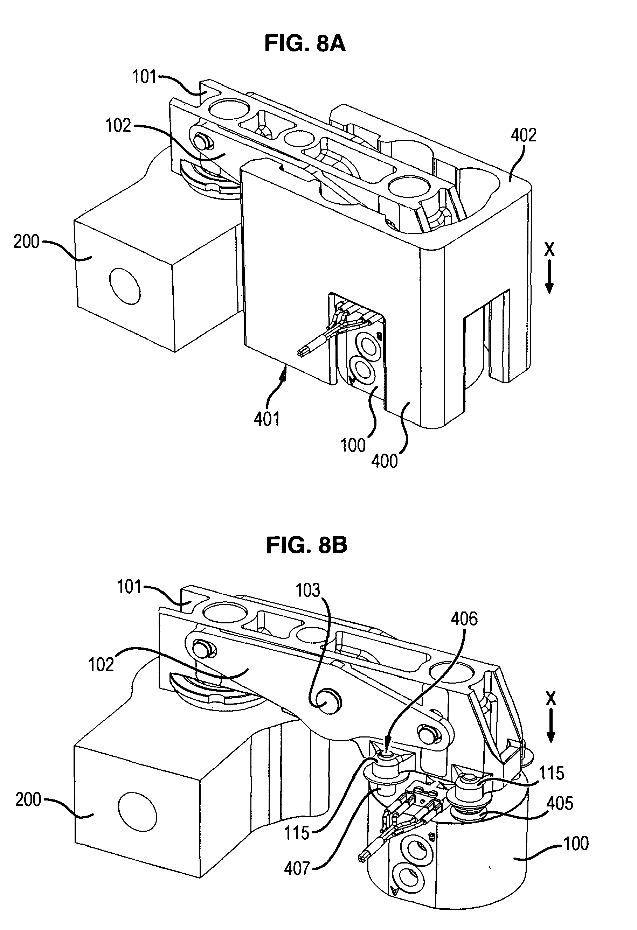

En référence aux figures 8A et 8B, qui illustrent un premier mode de réalisation de l'invention, l'élément d'appui 400 est agencé autour du vérin 100.

Ledit élément d'appui présente une première surface d'appui 401 contre le moule d'injection, et une deuxième surface d'appui 402 contre la plaque arrière qui est en appui contre le plateau de la presse d'injection ou contre la plaque arrière du moule.

Les surfaces d'appui 401 et 402 sont de préférence planes pour pouvoir glisser respectivement sur le moule d'injection et sur la plaque arrière et présentent l'aire la plus grande possible compte tenu des contraintes de montage du vérin et d'encombrement, afin de procurer une surface d'appui maximale pour le moule d'injection sur la plaque arrière.

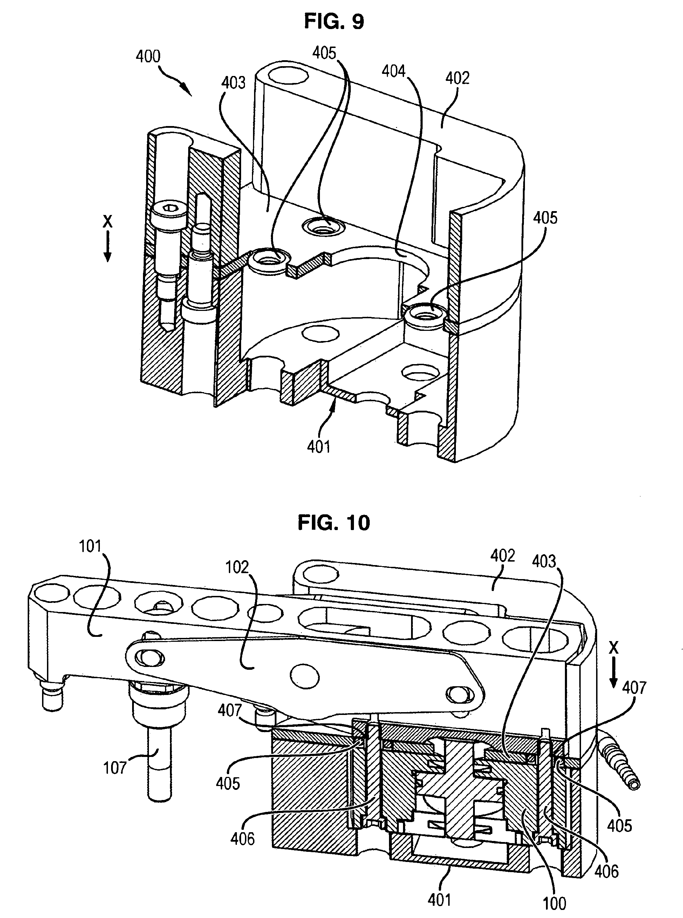

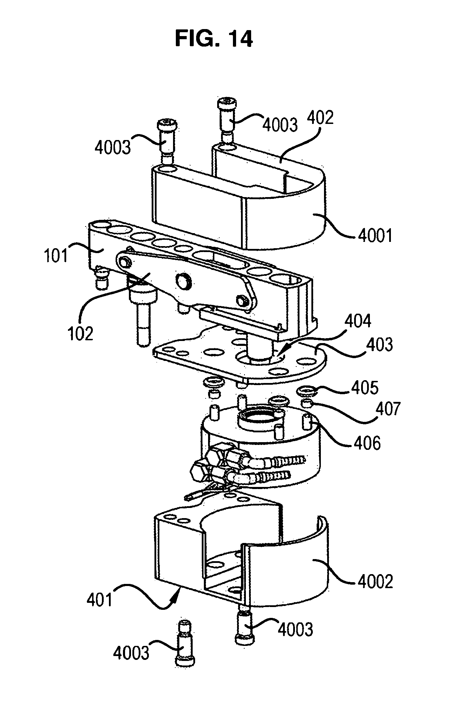

La figure 9 représente un deuxième mode de réalisation de l'invention, dans lequel, contrairement à l'élément d'appui des figures 8A et 8B qui est monobloc, l'élément d'appui est constitué de l'assemblage de plusieurs composants dont le détail est visible sur la figure 14.

Dans ces deux cas, l'élément d'appui 400 se présente sous la forme d'un boîtier de forme générale parallélépipédique, dont la section selon un plan perpendiculaire à la direction d'injection est sensiblement carrée ou rectangulaire. Des parois parallèles à la direction d'injection relient les surfaces d'appui 401 et 402.

A l'intérieur de ce boîtier est agencé un support 403 destiné à la fixation de la poutre. Le support 403 est perpendiculaire à la direction d'injection.

A cet effet, ledit support 403 présente un orifice 404 pour permettre le passage de la tige du vérin 100.

Les dimensions intérieures de l'orifice 404 sont supérieures aux dimensions extérieures de la tige du vérin 100 de manière à ce qu'il existe un jeu entre la tige du vérin 100 et l'orifice 404.

La figure 8B est similaire à la figure 8A mais l'élément d'appui n'a pas été représenté afin de laisser apparaître les moyens de fixation.

La poutre 101 présente, du côté du vérin 100, des bossages 115 destinés à la fixation du vérin 100 au moyen de vis 406.

Le support 403 est intercalé entre la poutre 101 et le vérin 100 par l'intermédiaire de moyens élastiques 405 à l'intérieur desquels passent les vis 406 qui permettent de fixer le vérin sur la poutre.

Des entretoises 407, qui se présentent ici sous la forme de cylindres dont la hauteur est légèrement supérieure à l'épaisseur de la paroi du support 403, sont intercalées entre les moyens élastiques 405 et la tige des vis 406.

La fonction de ces entretoises 407 est d'éviter que, lors du serrage des vis 406, le support 403 ne soit comprimé entre le vérin 100 et les vis 406, ce qui empêcherait toute absorption des dilatations lors du fonctionnement du système d'injection.

Les moyens élastiques 405 se présentent par exemple sous la forme de rondelles élastiques, qui peuvent être en tout matériau élastomère approprié.

De manière alternative, non illustrée ici, les moyens élastiques peuvent comprendre des ressorts ; par exemple, trois ressorts disposés à 120° les uns par rapport aux autres.

Sur les figures, les bossages 115, les vis 406, les entretoises 407 et les moyens élastiques 405 sont au nombre de quatre, mais il va de soi que l'on pourrait définir d'autres modes de liaison adaptés pour autoriser un déplacement de la poutre et du vérin par rapport à l'élément d'appui dans une direction perpendiculaire à la direction d'injection, sans pour autant sortir de la portée de la présente invention.

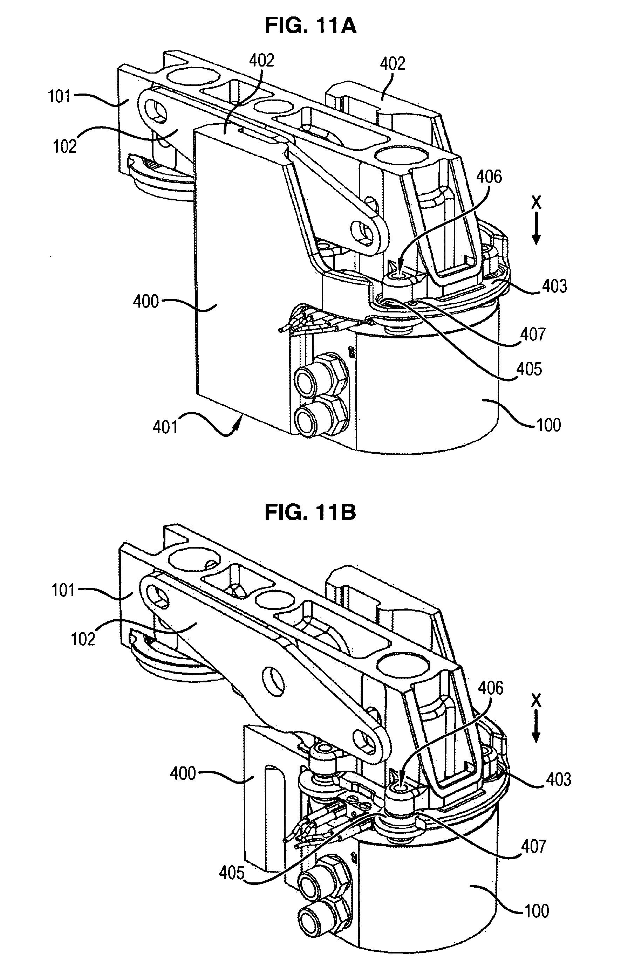

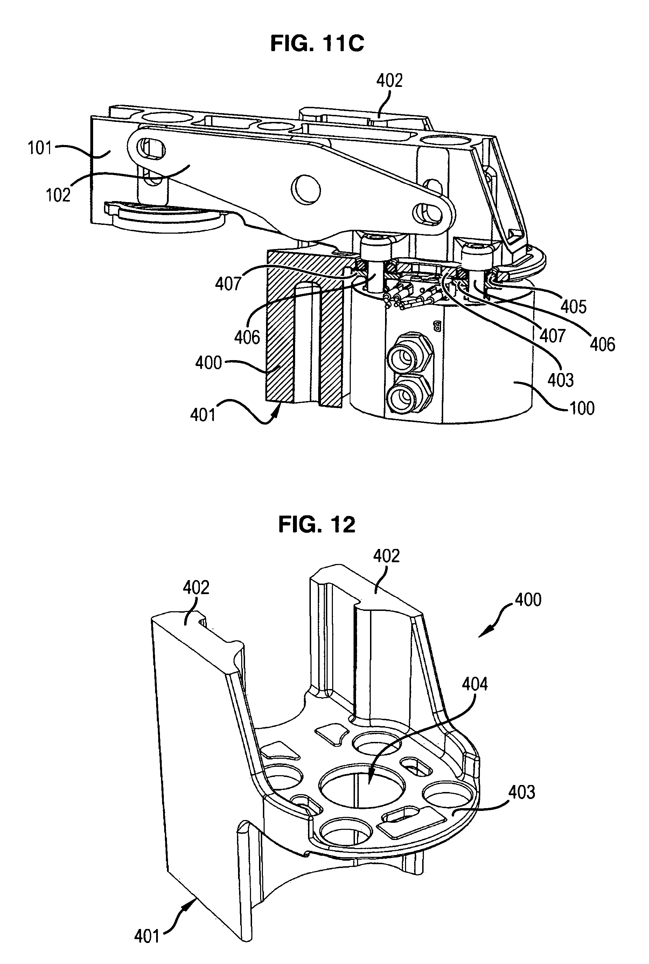

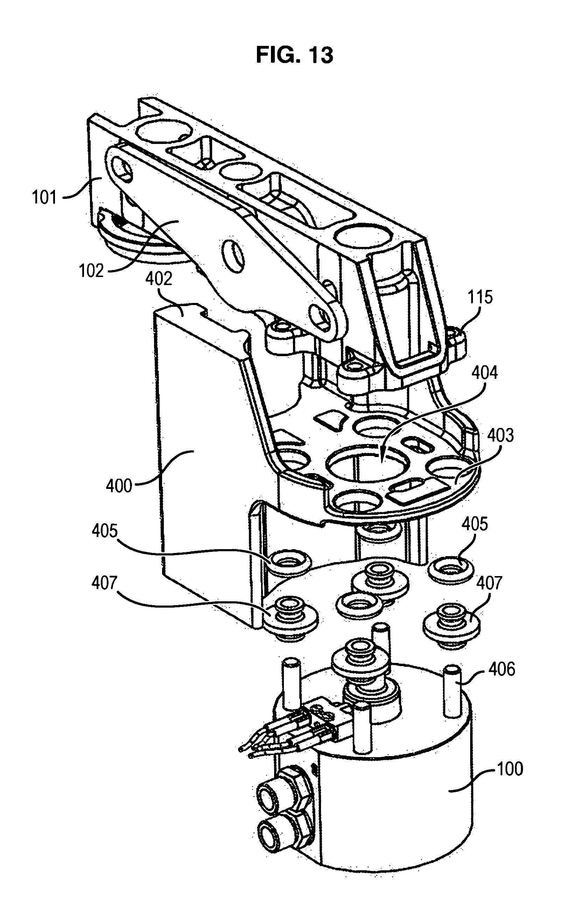

Les figures 11A à 13 présentent une autre forme de l'élément d'appui 400 et des entretoises 407.

Ce troisième mode de réalisation correspond à une configuration du moule d'injection dans laquelle les évidements ménagés autour du vérin sont moins importants que dans les cas précédents, ce qui permet de réaliser un élément d'appui n'entourant pas complètement le vérin, et donc moins encombrant.

L'élément d'appui 400 comprend ainsi des surfaces d'appui parallèles 401 et 402 dont la surface est plus faible que dans le cas précédent, mais dont la fonction est identique.

L'élément d'appui peut être fabriqué par toute technique appropriée, telle que de l'usinage ou de la fonderie.

De même, l'élément d'appui 400 peut être monobloc, comme dans l'exemple illustré aux figures 8A et 11A à 13, ou constitué de plusieurs pièces assemblées, comme dans l'exemple des figures 9, 10 et 14 où l'élément d'appui comprend un élément côté plaque arrière 4001 et un élément côté moule 4002 assemblés par des vis 4003, le support 403 étant intercalé entre les éléments 4001 et 4002.

Selon une variante non illustrée ici, le support 403 de l'élément d'appui n'est pas intercalé entre la poutre et le vérin, mais situé par exemple à l'avant du vérin (par rapport au sens d'injection).

Lors de l'assemblage du moule d'injection sur le système et la plaque arrière, l'élément d'appui 400 se trouve intercalé entre le moule (par l'intermédiaire de la surface d'appui 401) et la plaque arrière (par l'intermédiaire de la surface d'appui 402).

En raison des forces de serrage des différentes plaques, l'élément d'appui se trouve donc en contrainte selon la direction X d'injection.

Lorsque le distributeur et/ou la poutre sont amenés à se dilater sous l'effet des variations de température, dans une direction perpendiculaire à la direction X d'injection, lesdites dilatations sont absorbées par les moyens élastiques 405 intercalés entre l'élément d'appui 400 et la poutre.

Comme indiqué plus haut, les entretoises 407 permettent d'éviter que, lors du serrage des vis 406, le support 403 ne soit comprimé entre le vérin 100 et les vis 406, ce qui empêcherait toute absorption des dilatations.

On évite ainsi tout cisaillement du dispositif de commande de l'obturateur, même si l'élément d'appui lui-même est coincé.

L'élément d'appui constitue donc un moyen particulièrement simple et peu onéreux pour augmenter les surfaces d'appui du moule d'injection sans risquer de perturber le fonctionnement de l'obturateur.

On précise que les figures 8A à 14 représentent la poutre massive 101 à titre purement illustratif, et que la poutre peut également être constituée de plusieurs pièces telles que décrites plus haut.

Par ailleurs, le système illustré ne comprend qu'une buse d'injection, mais on comprend que l'invention s'applique également à un système comprenant une pluralité de buses d'injection, chacune équipée d'un obturateur et des moyens de commande dudit obturateur.

## Revendications

1. Système d'injection, dans une empreinte de moulage d'un moule d'injection, d'une matière thermoplastique à l'état fluide, comprenant :
- un distributeur (200) propre à être maintenu à une température d'injection supérieure à la température limite au-delà de laquelle la matière se présente à l'état fluide, ledit distributeur comprenant un canal de distribution et au moins une sortie de matière thermoplastique,
- une buse d'injection définissant au moins une portion d'un passage de transit dont l'entrée est en liaison fluidique avec la sortie du canal de distribution, et dont la sortie débouche sensiblement dans l'empreinte de moulage,
- un obturateur (7) monté à l'intérieur du passage de transit pour coulisser entre une position d'obturation de celui-ci et une position d'ouverture de celui-ci,
- des moyens de commande pour faire coulisser alternativement l'obturateur (7),
lesdits moyens de commande comprenant un vérin (100), fixé de manière déportée sur le distributeur (200) par l'intermédiaire d'une poutre aplatie, et un levier agencé en basculement autour d'un axe (4) de manière à transmettre à l'obturateur (7) les mouvements de la tige du vérin,
ledit système étant **caractérisé en ce que** :
- il comprend en outre un élément d'appui (400) présentant une surface (401) d'appui contre le moule d'injection et une surface (402) d'appui contre une plaque située à l'arrière du distributeur (200) par rapport au sens d'injection, et
- la poutre est liée audit élément d'appui (400) par au moins un moyen élastique (405) adapté pour absorber des dilatations de la poutre et/ou du distributeur selon une direction perpendiculaire à la direction d'injection.

2. Système selon la revendication 1, **caractérisé en ce que** ledit élément d'appui (400) comprend des parois parallèles à la direction d'injection et reliant les surfaces d'appui (401, 402) et un support (403) perpendiculaire à la direction d'injection présentant des orifices pour le passage d'un moyen de fixation (406) du vérin sur la poutre, et **en ce que** ledit moyen élastique (405) est intercalé entre le support (403) et le moyen (406) de fixation du vérin sur la poutre.

3. Système selon l'une des revendications 1 ou 2, **caractérisé en ce qu'**il comprend en outre au moins une entretoise (407) agencée entre ledit moyen élastique (405) et le moyen (406) de fixation du vérin sur la poutre et adaptée pour éviter le pincement du support (403) entre le vérin (100) et les moyens de fixation (406).

4. Système selon l'une des revendications 1 à 3, **caractérisé en ce que** ledit moyen élastique (405) est une rondelle élastique.

5. Système selon l'une des revendications 1 à 4, **caractérisé en ce que** la poutre porte l'axe (4) de basculement du levier.

6. Système selon l'une des revendications 1 à 5, **caractérisé en ce que** la poutre est une pièce massive (101).

7. Système selon l'une des revendications 1 à 5 **caractérisé en ce que** la poutre est formée d'un assemblage de pièces (1, 8, 9) en tôle d'acier.

8. Système selon la revendication 7, **caractérisé en ce que** ladite poutre comprend deux bras (1) parallèles, une bride de vérin (9) fixée sur le vérin (100), et une bride d'obturateur (8) fixée sur le distributeur (200).

9. Système selon la revendication 8, **caractérisé en ce que** les bras (1) et les brides (8, 9) d'obturateur et de vérin présentent des découpes complémentaires (17, 19, 83a, 84a) permettant leur emboîtement.

10. Système selon l'une des revendications 8 ou 9, **caractérisé en ce que** les bras (1) et la bride d'obturateur (8) présentent des découpes (18, 81) permettant leur centrage sur le pied de buse (300).

11. Système selon l'une des revendications 4 à 7, **caractérisé en ce que** le levier comprend deux bras (2a, 2b) en tôle d'acier.

12. Elément d'appui (400) adapté pour un système selon l'une des revendications 1 à 11, présentant une surface (401) d'appui contre le moule d'injection et une surface (402) d'appui contre une plaque située à l'arrière du distributeur (200) par rapport au sens d'injection, un support (403) pour la fixation de la poutre (100) et au moins un moyen élastique (405) destiné à être intercalé entre ledit support (403) et le moyen (406) de fixation du vérin sur la poutre.

## Patentansprüche

1. Spritzsystem zum Spritzen von thermoplastischem Material im fließfähigen Zustand in einen Formabdruck einer Spritzform, enthaltend:
- einen Verteiler (200), der auf einer Spritztemperatur gehalten werden kann, die höher ist als die Grenztemperatur, oberhalb derer das Material im fließfähigen Zustand vorliegt, wobei der Verteiler einen Verteilungskanal und zumindest einen Auslass für thermoplastisches Material aufweist,
- eine Spritzdüse, die zumindest einen Abschnitt eines Durchgangs zum Durchströmen definiert, dessen Einlass mit dem Auslass des Verteilungskanals in Strömungsverbindung steht und dessen Auslass im Wesentlichen in den Formabdruck mündet,
- ein Verschlussglied (7), das im Inneren des Durchgangs gelagert ist, um sich zwischen einer Verschließstellung zum Verschließen desselben und einer Öffnungsstellung zum Freigeben desselben zu verschieben,
- Steuermittel, um das Verschlussglied (7) wechselweise zu verschieben,
wobei die Steuermittel einen Kraftzylinder (100) aufweisen, der über einen abgeflachten Träger an den Verteiler (200) versetzt befestigt ist, sowie einen Hebel, der um eine Achse (4) verschwenkbar so gelagert ist, dass er die Bewegungen der Zylinderstange auf das Verschlussglied (7) überträgt,
wobei das System **dadurch gekennzeichnet ist, dass**
- es ferner ein Abstützelement (400) aufweist, das eine Abstützfläche (401) zur Abstützung an der Spritzform und eine Abstützfläche (402) zur Abstützung an einer Platte enthält, die auf der Rückseite des Verteilers (200) bezüglich der Spritzrichtung liegt, und
- der Träger mit dem Abstützelement (400) über zumindest ein Federmittel (405) verbunden ist, das geeignet ist, Ausdehnungen des Trägers und/oder des Verteilers in einer Richtung senkrecht zur Spritzrichtung aufzunehmen.

2. System nach Anspruch 1, **dadurch gekennzeichnet, dass** das Abstützelement (400) Wände aufweist, die parallel zur Spritzrichtung verlaufen und die Abstützflächen (401, 402) und einen Halter (403) verbinden, der senkrecht zur Spritzrichtung verläuft und Öffnungen für den Durchtritt eines Befestigungsmittels (406) zum Befestigen des Kraftzylinders an den Träger aufweist, und dass das Federmittel (405) zwischen Halter (403) und Befestigungsmittel (406) zum Befestigen des Kraftzylinders an den Träger eingesetzt ist.

3. System nach einem der Ansprüche 1 oder 2, **dadurch gekennzeichnet, dass** es ferner zumindest eine Strebe (407) aufweist, die zwischen dem Federmittel (405) und dem Befestigungsmittel (406) zum Befestigen des Kraftzylinders an den Träger angeordnet und geeignet ist, ein Verklemmen des Halters (403) zwischen dem Zylinder (100) und den Befestigungsmitteln (406) zu vermeiden.

4. System nach einem der Ansprüche 1 bis 3, **dadurch gekennzeichnet, dass** das Federmittel (405) eine Federscheibe ist.

5. System nach einem der Ansprüche 1 bis 4, **dadurch gekennzeichnet, dass** der Träger die Schwenkachse (4) zum Verschwenken des Hebels trägt.

6. System nach einem der Ansprüche 1 bis 5, **dadurch gekennzeichnet, dass** der Träger ein massiv ausgeführtes Teil (101) ist.

7. System nach einem der Ansprüche 1 bis 5, **dadurch gekennzeichnet, dass** der Träger aus einer Zusammenfügung von Teilen (1, 8, 9) aus Stahlblech ist.

8. System nach Anspruch 7, **dadurch gekennzeichnet, dass** der Träger zwei parallel verlaufende Arme (1), einen am Kraftzylinder (100) befestigten Zylinderflansch (9) und einen am Verteiler (200) befestigten Verschlussgliedflansch (8) aufweist.

9. System nach Anspruch 8, **dadurch gekennzeichnet, dass** die Arme (1) und die Flansche (8, 9) des Verschlussglieds und des Kraftzylinders komplementäre Ausschnitte (17, 19, 83a, 84a) aufweisen, die deren Zusammenstecken ermöglichen.

10. System nach einem der Ansprüche 8 oder 9, **dadurch gekennzeichnet, dass** die Arme (1) und der Verschlussgliedflansch (8) Ausschnitte (18, 81) aufweisen, die deren Zentrierung auf den Düsenkopf (300) gestatten.

11. System nach einem der Ansprüche 4 bis 7, **dadurch gekennzeichnet, dass** der Hebel zwei Arme (2a, 2b) aus Stahlblech aufweist.

12. Abstützelement (400), das für ein System nach einem der Ansprüche 1 bis 11 geeignet ist, enthaltend eine Abstützfläche (401) zur Abstützung an einer Spritzform und eine Abstützfläche (402) zur Abstützung an einer Platte, die an der Rückseite des Verteilers (200) bezüglich der Spritzrichtung liegt, einen Halter (403) zum Befestigen des Trägers (100) und zumindest ein Federmittel (405), das dazu bestimmt ist, zwischen den Halter (403) und das Befestigungsmittel (406) zum Befestigen des Kraftzylinders an den Träger eingesetzt zu werden.

## Claims

1. A system for injection in a casting cavity of an injection mould a thermoplastic material in the fluid state, comprising:
- a distributor (200) which can be maintained at an injection temperature greater than the temperature limit beyond which the material is in the fluid state, said distributor comprising a distribution channel and at least one outlet of thermoplastic material,
- an injection nozzle defining at least one portion of a transit passage whereof the inlet is in fluidic connection with the outlet of the distribution channel, and whereof the outlet terminates substantially in the casting cavity,
- a gate (7) mounted inside the transit passage to slide between a locking position of the latter and an opening position of the latter,
- control means to alternatively have the gate (7) slide, said control means comprising a cylinder (100), fixed offset on the distributor (200) by means of a flattened beam, and a lever arranged to pivot about an axis (4) so as to transmit the movements of the rod of the cylinder to the gate (7), said system being **characterised in that**:
- it also comprises a support element (400) having a support surface (401) against the injection mould and a support surface (402) against a plate located behind the distributor (200) relative to the direction of injection, and
- the beam is attached to said support element (400) by at least one elastic means (405) adapted to absorb expansion of the beam and/or of the distributor in a direction perpendicular to the direction of injection.

2. The system as claimed in Claim 1, **characterised in that** said support element (400) comprises walls parallel to the direction of injection and connecting the support surfaces (401, 402) and a support (403) perpendicular to the direction of injection having orifices for the passage of fastening means (406) of the cylinder on the beam, and **in that** said elastic means (405) is interposed between the support (403) and the fastening means (406) of the cylinder on the beam.

3. The system as claimed in any one of Claims 1 or 2, **characterised in that** it also comprises at least one spacer (407) arranged between said elastic means (405) and the fastening means (406) of the cylinder on the beam and adapted to avoid wedging of the support (403) between the cylinder (100) and the fastening means (406).

4. The system as claimed in any one of Claims 1 to 3, **characterised in that** said elastic means (405) is an elastic washer.

5. The system as claimed in any one of Claims 1 to 4, **characterised in that** the beam bears the pivoting axis (4) of the lever.

6. The system as claimed in any one of Claims 1 to 5, **characterised in that** the beam is a solid piece (101).

7. The system as claimed in any one of Claims 1 to 5 **characterised in that** the beam is formed by an assembly of pieces (1, 8, 9) made of steel sheet.

8. The system as claimed in Claim 7, **characterised in that** said beam comprises two parallel arms (1), a cylinder flange (9) fixed on the cylinder (100), and a gate flange (8) fixed on the distributor (200).

9. The system as claimed in Claim 8, **characterised in that** the arms (1) and the gate and cylinder flanges (8, 9) exhibit complementary cutouts (17, 19, 83a, 84a) enabling them to fit together.

10. The system as claimed in any one of Claims 8 or 9, **characterised in that** the arms (1) and the gate flange (8) exhibit cutouts (18, 81) enabling them to be centred on the nozzle foot (300).

11. The system as claimed in any one of Claims 4 to 7, **characterised in that** the lever comprises two arms (2a, 2b) made of steel sheet.

12. A support element (400) adapted for a system as claimed in any one of Claims 1 to 11, having a support surface (401) against the injection mould and a support surface (402) against a plate located behind the distributor (200) relative to the direction of injection, a support (403) for fastening the beam (100) and at least one elastic means (405) intended to be interposed between said support (403) and the fastening means (406) of the cylinder on the beam.
